# EUROPEAN PATENT APPLICATION

(11) **EP 3 151 471 A1**
(43) Date of publication of application: **05.04.2017**
(21) Application number: 16191202.7
(22) Date of filing: 28.09.2016
(51) Int. Cl.: H04L 12/26, H04J 3/06

(54) **ADAPTIVE COMPENSATION FOR INTERNAL ASYMMETRIC DELAY IN NETWORK BASED TIMING SYSTEMS**

(30) Priority: 29.09.2015 US 201514869586
(71) Applicant: Tektronix, Inc., Beaverton, Oregon 97077-0001 (US)
(72) Inventor: Overton, Michael, Beaverton, Oregon 97008 (US)
(74) Representative: HGF Limited

(57) **Abstract**

Embodiments of the invention include a network-based timing instrument that has a master unit and an internal switch that communicate with a slave device. The master unit includes a timing compensator. The internal switch is coupled to the master unit by the internal network and is also coupled to an external network that is outside of the network-based timing instrument. The internal switch is structured to provide speed information of the internal network and the external network to the master unit, and the timing compensator of the master unit is modified based on the speed information provided by the internal switch. The master unit may also modify the timing compensator based on a message length of messages sent by the master unit. Also the internal switch may be structured to provide incoming and/or outgoing message residence time information to the master unit, and the master unit may modify the timing compensator based on such residence time information. The same techniques may be applied to a slave node of a network-based timing instrument. Methods of adjusting network timing compensation of a network-based timing device are also described.

## Description

### FIELD OF INVENTION

This disclosure generally relates to network-based time distribution devices, and, more particularly, to a system for compensating for asymmetric delay in network based timing systems.

### BACKGROUND

Communication networks may include network switches between a sending node and receiving node. Network switches direct traffic to an addressed node on the network, which saves network traffic by reducing the need to broadcast the traffic to all nodes of the network. In operation, many network switches use a "store and forward" technique that receives an entire message, formed of multiple data packets, before the message is sent to the desired destination address.

Network delay variation is one of the primary difficulties in distributing time over a communication network. One type of network delay variation is variation for one direction of message propagation versus the other. This is commonly called network delay asymmetry.

There are several mechanisms that can cause delay asymmetry, but one of them is a rate mismatch on two ports of a switch. The "store and forward" mechanism of the switch requires that the entire message be stored in the switch buffer before the output forwarding process starts. A residence time is the time from when the first network packet of a message is received into the switch until the first packet of the same message is sent from the switch. In other words, the residence time of the switch is generally the time to store the message data at the input rate of the switch. If the message is input to the switch at a slow speed and output at a high speed, then the delay from the time the first packet is received until the first packet exits is relatively long, due to the fact that the switch buffers the entire message before sending it out, and the message loads slowly into the switch due to the slow network speed. Conversely, if the message is input to the switch at a fast speed and output at a slow speed, then the delay from the time the first packet is received until the first packet exits is relatively short, because the switch received the entire message relatively quickly at the higher network speed. Thus, the residence time of the switch varies with the direction of travel when the rates at the input port and output port of the switch are different.

In a network that includes different communication speeds, timing accuracy suffers relative to same-speed networks because of the way the switch operates. Some timing protocols, such as the Precision Time Protocol (IEEE 1588-2002 (v1) or IEEE 1588-2008 (v2)), do not account for asymmetric delay, and instead effectively use an average of the two delays by assuming that both directions are equal in the delay calculations.

The residence time variation, i.e., the time that the switch spends receiving and buffering the message, is a function of the two network rates as well as the message length. Some switches, such as transparent switches, report residence time information to the receiving device so the receiver can account for the residence time in its speed determination. Transparent switches are expensive and not universally available on all networks, however, and thus it is difficult to accurately detect and measure asymmetric delay in a mixed-speed network.

Embodiments of the invention address these and other limitations of the prior art.

### SUMMARY OF THE INVENTION

Embodiments of the invention include a network-based timing instrument that has a master unit and an internal switch. The master unit includes a timing compensator. The internal switch is coupled to the master unit by the internal network and is also coupled to an external network that is outside of the network-based timing instrument. The internal switch is structured to provide speed information of the internal network and speed information of the external network to the master unit, and the timing compensator of the master unit is modified based on the speed information provided by the internal switch. The master unit may also modify the timing compensator based on a message length of messages sent by the master unit. Also the internal switch may be structured to provide incoming and/or outgoing message residence time information to the master unit, and the master unit may modify the timing compensator based on such residence time information.

Methods of adjusting network timing compensation of a network-based timing device include deriving speed information of the external network from the internal switch and adjusting timing compensation of the network-based timing device based on the speed information from the internal switch and based on a speed of the internal network. Other methods include adjusting timing compensation of the network-based timing device based on residence time information derived from the internal switch.

### BRIEF DESCRIPTION OF THE DRAWINGS

Reference is made to embodiments of the invention, examples of which may be illustrated in the accompanying figures. These figures are intended to be illustrative, not limiting. Although the invention is described in the context of these embodiments, it should be understood that this description is not intended to limit the scope of the invention to these particular embodiments.
FIG. 1 is a block diagram illustrating a portion of a timing instrument including an incorporated internal switch according to embodiments of the invention.
FIG. 2 is an example flow diagram illustrating operations to set various timing compensations based on communication rates determined in conjunction with the internal switch of FIG. 1 according to embodiments of the invention.
FIG. 3 is an example flow diagram illustrating operations to compensate a timebase of a master component based on time measurements in conjunction with the internal switch of FIG. 1 according to embodiments of the invention.

### DETAILED DESCRIPTION OF THE INVENTION

The following detailed description will refer to one or more embodiments, but the present invention is not limited to such embodiments. Rather, the detailed description and any embodiment(s) presented are intended only to be illustrative. Those skilled in the art will readily appreciate that the detailed description given herein with respect to the Figures is provided for explanatory purposes as the invention extends beyond these limited embodiments.

Certain terms are used throughout the description and claims to refer to particular system components. In the following discussion and in the claims, the terms "including" and "comprising" are used in an open-ended fashion, and thus should be interpreted to mean "including, but not limited to ...." Phrases such as "coupled to" and "connected to" and the like are used herein to describe a connection between two devices, elements and/or components and are intended (unless otherwise restricted specifically) to mean physically, optically and/or electrically either coupled directly together, or coupled indirectly together, for example via one or more intervening elements or components or via a wireless or other connection, where appropriate. The term "system" refers broadly to a collection of two or more components and may be used to refer to an overall system (e.g., a communication system, a receiving system, a testing system, a computer system or a network of such devices/systems), a subsystem provided as part of a larger system, and/or a process or method pertaining to operation of such a system or subsystem.

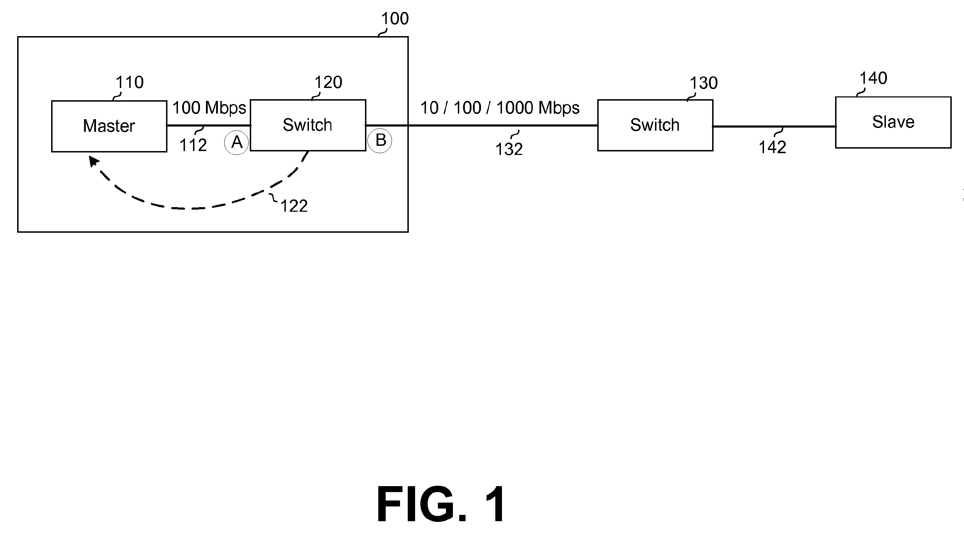

FIG. 1 is a block diagram illustrating a portion of a timing instrument 100 including an incorporated, internal switch according to embodiments of the invention. The instrument 100 includes a master node 110 on a network that is internally connected to a switch 120 that is incorporated into the measurement instrument 100. The switch 120 may be characterized for multiple combinations of network speed and for various lengths of communication messages that pass through it. This characterization allows the instrument 100 to provide messages with corrected timestamps that allow the slave 140 to adjust its clock to match the clock in the master 110 to a high degree of accuracy.

The internal switch 120 is coupled at Port A to a network master node 110 through an internal network 112 that operates at a native communication speed, for example 100 Mbps. The internal switch is coupled to an external switch 130 through an external network 132, which may operate at one of several speeds, for example 10 Mbps, 100 Mbps, or 1000 Mbps. Of course other network speeds are possible and the invention is not limited to operating on any particular network speed. Communication from the switch 120 to the external network 132 occurs through Port B. The external switch 130 is coupled to a slave 140 through another network 142, which preferably operates at the speed of the external network 132. In operation, the master 110 communicates to the slave 140 by sending communication messages, which are formed of a number of packets, to the slave 140, through the internal switch 120 and external switch 130. The slave 140 communicates messages to the master 110.

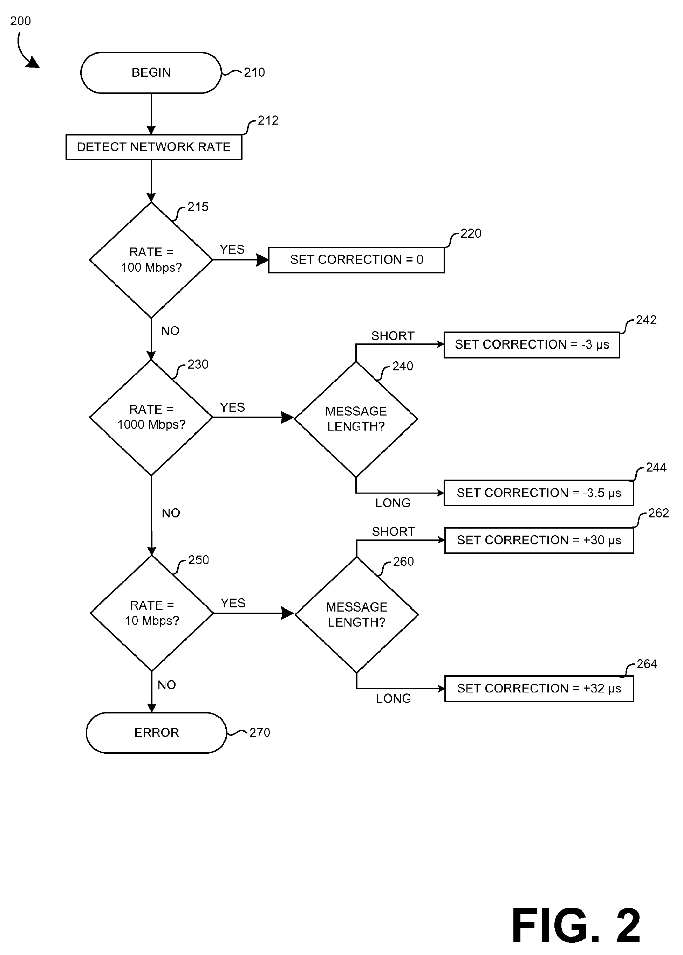

In a first embodiment, the master 110 detects a speed of the network 132 in a conventional manner, such as by directly reading the network link speed from a register or file stored in the switch 120. The communication of the rate information from the switch 120 to the master 100 may occur over the internal network 112 or through a separate communication link 122. This network speed may then be used to directly set a correction factor for the network speed in the master 110 as described below with reference to FIG. 2. For example, the master 110 may set a zero time correction factor when the network 132 is operating at the native internal speed of the network of 100 Mbps, a shortened correction when the network 132 is operating quicker than the internal network, such as 1000 Mbps, and a lengthened correction when the network is operating slower than the internal network, such as 10 Mbps. The master 110 may then use this correction factor when timestamping messages to and from the slave 140.

FIG. 2 is an example flow diagram illustrating operations to set various timing compensations based on communication rates detected by the internal switch of FIG. 1 according to embodiments of the invention. A flow 200 begins in an operation 210 and proceeds to operation 212 with the master 110 determining the speed of the network 132. As described above, the master 110 may do this by querying the switch 120 that is attached to the network 132.

Next, the master 110 uses the information from the switch 120 to determine if the network 132 is operating at the native rate internal to the timing instrument 100, which in this example is 100 Mbps, in an operation 215. If the network 132 is operating at the native network rate that couples the master 110 to the switch 120, then the correction factor is set at 0 in an operation 220.

If instead the switch 120 reports that the network 132 is not operating at its native rate, then the flow 200 determines if the network 132 is operating at another rate, for example 1000 Mbps in an operation 230. If the network 132 is operating at the particular rate, then the flow 200 exits operation 230 to another query operation 240, which determines which length messages are being sent by the master 110. If the master 110 is sending short messages, such as 86 Bytes in length, then the master 110 sets the timing correction at a first setting, such as - 3 µs. If instead the master is sending long messages, such as 106 Bytes in length, then the master 110 sets the timing correction at another setting, such as -3.5 µs. There may be more than just two different message lengths, in which case the query operation 240 would include more than two comparisons. In such a case, each message length may receive a particular correction setting specifically for the message length at the specific detected speed. Or, in other embodiments, for example when the timing instrument 100 always sends and receives the same size messages, then the message length query 240 is not performed at all. In such cases, a pre-determined static correction, such as -3 µs, is set determined only by the speed of the network.

If the network 132 is not operating at either of the first two detected speeds, then a query operation 250 checks to see if it is operating at a third speed, for example 10 Mbps. Again, if the network 132 is operating at the detected speed, then the message length to be sent by the master 110 may be used to determine the particular timing correction setting. For example, if the message length is a short message length, such as 86 bytes, then the timing correction factor is set at, for example, +30 µs. Conversely, if the message length is a long message length, such as 106 bytes, then the timing correction factor is set at, for example, +32 µs. Also, as above, in cases where the timing instrument 100 always sends and receives the same size messages, then the timing correction is set to a pre-determined static correction, such as +30 µs.

Thus by using this method of operation, the timebase of the master 110 may be precorrected to compensate for any difference in the forward and reverse message residence time. In one embodiment, the correction is determined to be one-half the asymmetry in the forward and reverse residence time.

An alternative to using fixed correction values based on the speed of the network 132 is for the switch 120 to measure the time as each message enters and leaves the switch. With this information, the master device can calculate the asymmetry directly, and then make a compensation for such asymmetry.

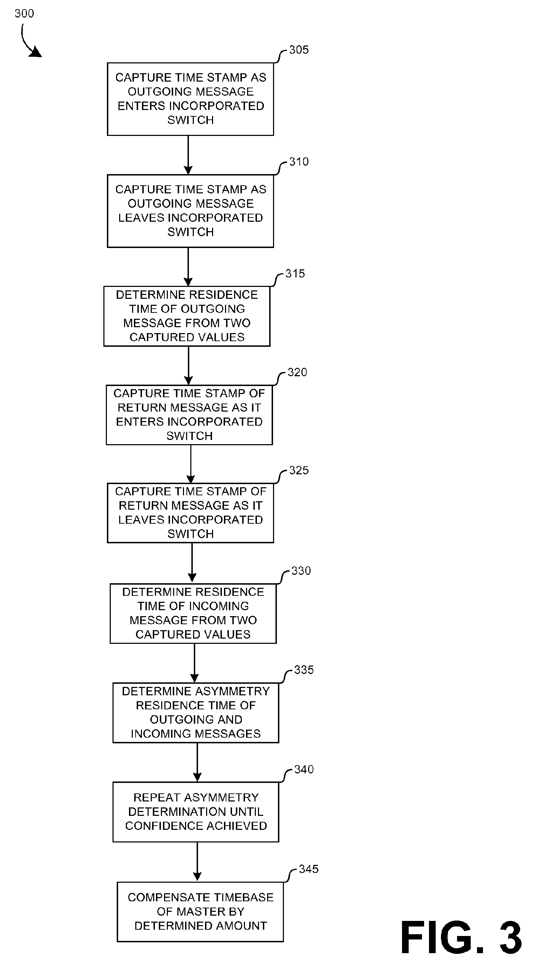

FIG. 3 is an example flow diagram illustrating operations to compensate a timebase of a master component based on time measurements by the internal switch 120 of FIG. 1 according to embodiments of the invention. A flow 300 begins at an operation 305 with an internal switch 120 capturing a timestamp as a message from the master 110 enters the internal switch at Port A. The internal switch 120 also captures a timestamp as the same message exits the internal switch 120 at Port B. As described above, the switch 120 stores all of the packets making up the message before sending the message to an external network. Using the timestamp data, the residence time of the outgoing message may be determined by comparing the two timestamp values in an operation 315. This comparison may happen in the switch 120 or the master 110.

To measure the residence time of incoming messages, the same data is captured in reverse using an incoming message. In more detail, a message sent from the slave 140 or other node on the connected network to the master 110 is timestamped as it enters the internal switch 120 at Port B in an operation 320. As above, the internal switch 120 waits until the entire message is received before sending the message to the master 110. The internal switch 120 also timestamps the time when it sends the message to the master 110 in an operation 325. Also as described above, the master 110 or internal switch 120, or both operating in conjunction, compares the two timestamps of the return message to determine a residence time for the return message in an operation 330.

Using the residence time in both the forward and return directions, as described above with reference to operations 315, 330, the master 110 can determine the asymmetry of the residence time of the outgoing and incoming messages in an operation 335. In an optional operation 340, any or all of the processes 305 - 335 can be repeated one or more times to reduce the effects from noise or potentially spurious data.

Once the asymmetry residence time data has been determined by the master 110, any timing correction in the master 110 or elsewhere in the device 100 may be performed by the master 110, such as by compensating the timebase of the master by a value related to the determination.

Although timing correction is described above with reference to an internal switch 120 on the master 110, the adaptive compensations may also be performed on the slave 140 with another switch (not pictured) coupled to the slave 140. In that way any network delay or mismatch may be compensated on both ends of the network, which provides the network based timing system with precisely controlled and predictable timing.

Examples provide a network-based timing instrument, comprising a master unit coupled to an internal network and structured to generate and timestamp messages, the master unit including a timing compensator, and an internal switch coupled to the master unit by the internal network and coupled to an external network that is outside of the network-based timing instrument, the internal switch structured to provide speed information of the internal network and speed information of the external network to the master unit.

In some examples, the master unit is structured to modify the timing compensator of the master unit based on the speed information provided by the internal switch.

In some examples, the master unit is structured to modify the timing compensator of the master unit based on the speed information provided by the internal switch and based on message length information of messages sent by the master unit.

In some examples, the internal switch is structured to provide message residence time information to the master unit.

In some examples, the internal switch is structured to generate the message residence time information for outgoing messages by providing timestamp data of when one of the messages generated by the master unit enters the internal switch and timestamp data of when the one of the messages generated by the master unit exits the internal switch.

In some examples, the internal switch is further structured to generate the message residence time information for incoming messages by providing timestamp data of when a message destined for the master unit enters the internal switch from the external network and timestamp data of when the message destined for the master unit exits the internal switch.

In some examples, the master unit is structured to modify the timing compensator of the master unit based on the message residence time information for outgoing messages and message residence time information for incoming messages.

In some examples, the master unit makes no timing compensation if the speed of the internal network matches the speed of the external network.

Examples provide a network-based timing instrument, comprising a slave unit coupled to an internal network and structured to generate and timestamp messages, the slave unit including a timing compensator, and an internal switch coupled to the slave unit by the internal network and coupled to an external network that is outside of the network-based timing instrument, the internal switch structured to provide speed information of the internal network and speed information of the external network to the slave unit.

In some examples, the slave unit is structured to modify the timing compensator of the slave unit based on the speed information provided by the internal switch.

In some examples, the slave unit is structured to modify the timing compensator of the slave unit based on the speed information provided by the internal switch and based on message length information of messages sent by the slave unit.

In some examples, the internal switch is structured to provide message residence time information to the slave unit.

In some examples, the internal switch is structured to generate the message residence time information for outgoing messages by providing timestamp data of when one of the messages generated by the slave unit enters the internal switch and timestamp data of when the one of the messages generated by the slave unit exits the internal switch.

In some examples, the internal switch is further structured to generate the message residence time information for incoming messages by providing timestamp data of when a message destined for the slave unit enters the internal switch from the external network and timestamp data of when the message destined for the slave unit exits the internal switch.

In some examples, the slave unit is structured to modify the timing compensator of the slave unit based on the message residence time information for outgoing messages and message residence time information for incoming messages.

In some examples, the slave unit makes no timing compensation if the speed of the internal network matches the speed of the external network.

Examples provide a method for adjusting network timing compensation of a network-based timing device including an internal network and coupled to an external network, the network-based timing device including an internal switch, the method comprising deriving speed information of the external network from the internal switch, and adjusting timing compensation of the network-based timing device based on the speed information from the internal switch and based on a speed of the internal network.

Some examples further comprise adjusting the timing compensation of the network-based timing device based on a length of a message generated by the master unit.

Some examples further comprise generating outgoing residence time information by comparing first outgoing timestamp data of when a message generated by a message sending unit enters the internal switch to second outgoing timestamp data of when the message generated by the message sending unit exits the internal switch, and generating incoming residence time information by comparing first incoming timestamp data of when a message generated by the message sending unit enters the internal switch to second incoming timestamp data of when the message generated by the message sending unit exits the internal switch.

Some examples further comprise adjusting the timing compensation of the network-based timing device based on the outgoing residence time information and the incoming residence time information.

In some examples, adjusting timing compensation of the network-based timing device comprises adjusting timing compensation in a master unit.

In some examples, adjusting timing compensation of the network-based timing device comprises adjusting timing compensation in a slave unit.

It shall be well understood to a person skilled in the art that the invention is not limited to any particular standard, but is applicable to systems having similar architecture without departing from the inventive scope.

The foregoing description has been described for purposes of clarity and understanding. In view of the wide variety of permutations to the embodiments described herein, the description is intended to be illustrative only, and should not be taken as limiting the scope of the invention. Although specific embodiments of the invention have been illustrated and described for purposes of illustration, various modifications may be made without departing from the scope of the invention. Accordingly, the invention should not be limited except as by the appended claims.

## Claims

1. A network-based timing instrument, comprising:
a master unit coupled to an internal network and structured to generate and timestamp messages, the master unit including a timing compensator; and
an internal switch coupled to the master unit by the internal network and coupled to an external network that is outside of the network-based timing instrument, the internal switch structured to provide speed information of the internal network and speed information of the external network to the master unit.

2. The network-based timing instrument of claim 1, in which the master unit is structured to modify the timing compensator of the master unit based on:
the speed information provided by the internal switch; and/or
message length information of messages sent by the master unit.

3. The network-based timing instrument of claims 1 or 2, in which the internal switch is structured to provide message residence time information to the master unit; optionally
wherein the internal switch is structured to generate the message residence time information for outgoing messages by providing timestamp data of when one of the messages generated by the master unit enters the internal switch and timestamp data of when the one of the messages generated by the master unit exits the internal switch; and/or
wherein the internal switch is further structured to generate the message residence time information for incoming messages by providing timestamp data of when a message destined for the master unit enters the internal switch from the external network and timestamp data of when the message destined for the master unit exits the internal switch.

4. The network-based timing instrument of any of claims 1 to 3 in which the master unit is structured to modify the timing compensator of the master unit based on the message residence time information for outgoing messages and message residence time information for incoming messages.

5. The network-based timing instrument of any of claims 1 to 4 in which the master unit makes no timing compensation if the speed of the internal network matches the speed of the external network.

6. A network-based timing instrument, comprising:
a slave unit coupled to an internal network and structured to generate and timestamp messages, the slave unit including a timing compensator; and
an internal switch coupled to the slave unit by the internal network and coupled to an external network that is outside of the network-based timing instrument, the internal switch structured to provide speed information of the internal network and speed information of the external network to the slave unit.

7. The network-based timing instrument of claim 6, in which the slave unit is structured to modify the timing compensator of the slave unit based on:
the speed information provided by the internal switch; and/or
message length information of messages sent by the slave unit.

8. The network-based timing instrument of claim 6 in which the internal switch is structured to provide message residence time information to the slave unit; optionally
wherein the internal switch is structured to generate the message residence time information for outgoing messages by providing timestamp data of when one of the messages generated by the slave unit enters the internal switch and timestamp data of when the one of the messages generated by the slave unit exits the internal switch; and/or
wherein the internal switch is further structured to generate the message residence time information for incoming messages by providing timestamp data of when a message destined for the slave unit enters the internal switch from the external network and timestamp data of when the message destined for the slave unit exits the internal switch.

9. The network-based timing instrument of any of claims 6 to 8 in which the slave unit is structured to modify the timing compensator of the slave unit based on the message residence time information for outgoing messages and message residence time information for incoming messages.

10. The network-based timing instrument of any of claims 6 to 9 in which the slave unit makes no timing compensation if the speed of the internal network matches the speed of the external network.

11. A method for adjusting network timing compensation of a network-based timing device including an internal network and coupled to an external network, the network-based timing device including an internal switch, the method comprising:
deriving speed information of the external network from the internal switch; and adjusting timing compensation of the network-based timing device based on the speed information from the internal switch and based on a speed of the internal network.

12. The method for adjusting network timing compensation of a network-based timing device according to claim 11, further comprising adjusting the timing compensation of the network-based timing device based on a length of a message generated by the master unit.

13. The method for adjusting network timing compensation of a network-based timing device according to claims 11 or 12, further comprising:
generating outgoing residence time information by comparing first outgoing timestamp data of when a message generated by a message sending unit enters the internal switch to second outgoing timestamp data of when the message generated by the message sending unit exits the internal switch; and
generating incoming residence time information by comparing first incoming timestamp data of when a message generated by the message sending unit enters the internal switch to second incoming timestamp data of when the message generated by the message sending unit exits the internal switch.

14. The method for adjusting network timing compensation of a network-based timing device according to any of claims 11 to 13, further comprising adjusting the timing compensation of the network-based timing device based on the outgoing residence time information and the incoming residence time information.

15. The method for adjusting network timing compensation of a network-based timing device according to claim 17, in which adjusting timing compensation of the network-based timing device comprises adjusting timing compensation in:
a master unit; and/or
a slave unit.
